# EUROPÄISCHE PATENTSCHRIFT

(11) **EP 0 589 402 B1**
(45) Veröffentlichungstag und Bekanntmachung des Hinweises auf die Patenterteilung: **02.05.1997**
(21) Anmeldenummer: 93115135.1
(22) Anmeldetag: 21.09.1993
(51) Int. Cl.: G01D 11/16, G01D 5/16

(54) **Positionssensor für Bewegungsabläufe**
Position sensor for sequence of movements
Capteur de position pour évolution de déplacements

(30) Priorität: 22.09.1992 DE 4231624
(43) Veröffentlichungstag der Anmeldung: 30.03.1994
(73) Patentinhaber: HORST SIEDLE KG, D-78120 Furtwangen (DE)
(72) Erfinder: Leue, Wolfgang, D-74232 Abstatt (DE); Bischoff, Ralf, D-73733 Esslingen (DE)
(74) Vertreter: Otte, Peter, Dipl.-Ing.

(56) Entgegenhaltungen:
- EP-A- 0 062 842
- EP-A- 0 389 669
- DE-A- 3 244 436
- DE-A- 4 037 493
- US-A- 4 599 601

## Beschreibung

### Stand der Technik

Die Erfindung geht aus von einem Positionssensor, und zwar insbesondere einem Drehwinkelsensor, wie er beispielsweise als Lenkwinkelsensor bei Kraftfahrzeugen eingesetzt wird und aus einer Vielzahl von Veröffentlichungen bekannt ist, z.B. DE-A-39 10 360, DE-U-89 12 785.4, DE-U-90 13 001.4 sowie EP-A-0 386 439.

Alle diese bekannten Drehwinkelgeber sind als sogenannte Tandem-Potentiometer ausgebildet und setzen sich aus einem Feinsensor zusammen, der z.B. alle 360° ein sich wiederholendes Meßsignal liefert, sowie einem Grobsensor, der über ein zwischengeschaltetes Getriebe synchron zum Feinsensor angetrieben wird und ein solches Signal liefert, daß es möglich ist, das gewonnene Gesamtsignal einer bestimmten Umdrehungslage zuzuordnen.

Da die vorliegende Erfindung ein bevorzugtes Anwendungsgebiet bei Drehwinkelgebern bzw. Lenkwinkelsensoren findet, wird im folgenden die Erfindung auch anhand des sich in diesem Zusammenhang ergebenden Stands der Technik erörtert, obwohl es sich versteht, daß ein Einsatz bei allen Positionssensoren, insbesondere im Maschinenbau und benachbarten Gebieten möglich ist, bei denen ein Abgleich oder eine Justierung des Positionssensors auf die ihn antreibende Maschinenelemente erforderlich ist, was bei nahezu allen Anwendungsfällen der Fall sein dürfte.

Speziell bei Kraftfahrzeugen ist es aus einer Vielzahl von Gründen erwünscht, den Lenkeinschlag des Lenkrades und damit den zugeordneten Lenkwinkel der gelenkten Räder zu erkennen, beispielsweise für Antriebsschlupfregelungen, die Steuerung einer Hinterradlenkung oder auch die Steuerung der Einstellung der Stoßdämpferhärte bei Kurvenfahrten u.dgl. Da aber bei allen Lenkungen zwischen den maximalen Endstellungen der Räder mehrere Umdrehungen der Lenksäule vorgesehen sind, muß die Zuordnung des Meßsignals zu einer bestimmten Umdrehungsposition sichergestellt sein, wobei ein einfaches Potentiometer an der Lenksäule wegen der von ihm gelieferten Mehrdeutigkeit jedenfalls nicht allein verwendet werden kann. Es ist daher auch grundsätzlich bekannt, zwei getrennte Potentiometer zu verwenden, von denen das eine vor dem Lenkgetriebe (lenkradseitig) und das andere beispielsweise hinter dem Lenkgetriebe (abtriebsseitig) angeordnet ist. Das erste Potentiometer kann dann als sogenannter Feinsensor und das zweite als Grobsensor dienen.

Dabei werden bei dem schon genannten Tandempotentiometer des deutschen Gebrauchsmusters 89 12 785.4 beide Potentiometer von einer gemeinsamen Welle angetrieben. Das eine Potentiometer ist von der Welle direkt angetrieben, das andere erfährt seinen Antrieb über ein als Planetengetriebe ausgebildetes Untersetzungsgetriebe, wobei das nichtuntersetzte Potentiometer über mehrere Umdrehungen durchdrehbar ist und das untersetzte Potentiometer als Grobsensor insgesamt nur einen Bereich von etwas weniger als 360° überstreicht.

Dabei beschäftigen sich die weiteren bekannten Veröffentlichungen hauptsächlich mit dem speziellen Aufbau solcher Tandempotentiometer, wobei das deutsche Gebrauchsmuster 90 13 001.4 angibt, die beiden Schleiferfedern für Grob- und Feinsensor im gleichen radialen Abstand zur antreibenden Welle anzuordnen und die Widerstandsbahnen beider Potentiometer mit gleichem Durchmesser auszustatten und diese gegeneinander axial zu versetzen, wodurch erreicht wird, daß sich bei beiden Potentiometern übereinstimmende Nennwerte ergeben, da diese hinsichtlich ihrer elektrischen Eigenschaften übereinstimmend aufgebaut sind, abgesehen vom Einfluß des Untersetzungsgetriebes.

Der Aufbau des aus der europäischen Patentanmeldung 0 386 439 bekannten Winkelsensors ist so getroffen, daß der Grobsensor zur Erzeugung des zweiten, den gesamten Drehbereich der Welle abgreifenden Meßsignals in einerspiralförmig verlaufenden Bahn gleitet, so daß die beiden Potentiometer mit ihren Widerstandsbahnen praktisch senkrecht aufeinander stehen.

Schließlich ist es aus der ebenfalls schon genannten deutschen Offenlegungsschrift 39 10 360 bekannt, bei einem Lenkwinkelsensor die beiden Potentiometer nebeneinander anzuordnen, wobei deren Schleiferwellen durch ein Getriebe schlupffrei miteinander verbunden sind. Eine Schleiferwelle ist dabei mittels einer Kupplung mit einer Lenksäule eines Kraftfahrzeugs verbunden, wobei die Übersetzung des Getriebes so ausgelegt ist, daß das von ihm angetriebene Potentiometer maximal eine Umdrehung ausführt, wenn die Lenksäule sich von einer Endstellung zur anderen bewegt.

In dieser Veröffentlichung ist auch schon erkannt worden, daß ein Abgleich des Lenkwinkelsensors erforderlich ist, der schon bei der Herstellung des Sensors vorgenommen wird. Dabei ist der Abgleich so getroffen, daß in Verbindung mit einer zusätzlichen Hardware-Ausstattung die ab Werk vorgenommene Einstellung bis zum Einbau im Kraftfahrzeug nicht wieder verloren gehen kann, und zwar dadurch, daß zur Fixierung der Einstellung der Potentiometer ein eine Sollbruchstelle aufweisender Stift vorgesehen ist, welcher eine Potentiometerwelle mit einem gehäusefesten Teil des Lenkwinkelsensors verbindet. Dabei ist der Stift in eine Bohrung des Gehäuses eingesetzt und ragt selbst in eine Bohrung eines Ringes, der sich bei Drehung der Schleiferwelle mit dieser mitdreht. Nach der Montage des Lenkwinkelsensors in dem jeweiligen Kraftfahrzeug, wobei sorgfältig auf die Mittenstellung der gelenkten Räder und des Lenkrades geachtet werden muß, läßt sich die Schleiferwelle nur dann bei erstmaliger Betätigung verdrehen, wenn dabei so hohe Kräfte aufgebracht werden, daß es zu einem Abscheren des Stiftes kommt. Durch die Anordnung eines solchen Blockierstiftes soll sich gegenüber den üblichen, von Hand zu lösenden Transportsicherungen der Vorteil ergeben, daß durch ein Vergessen der Entfernung oder Lösens der Transportsicherung eine Blockierung der Lenkung nicht möglich ist oder bei entsprechendem Kraftaufwand der Lenkwinkelsensor ganz oder teilweise auch zerstört werden könnte.

Ferner ist aus der DE-A-32 44 436 eine Anordnung bekannt, welche eine Normierung eines Meßsystems und eines Schrittmotors an einem ortsfesten Anschlag gestattet, bei welcher eine einem Stellgetriebe zwischen dem Schrittmotor und dem Träger eines Registrierorgans und/oder der Welle eines Zeigers zugeordnete Rutschkupplung vorgesehen ist. Diese Rutschkupplung tritt in Funktion, wenn der Zeiger eine bestimmte Stellung, beispielsweise den Meßwert Null, erreicht hat, um den Schrittmotor in eine dieser Zeigerstellung entsprechende Position ohne Veränderung der Zeigerstellung zu bewegen. Nachteilig bei dieser Anordnung ist, daß sie lediglich bei Drehung in einer Richtung funktioniert.

Aus der EP-A-0062842 geht darüber hinaus ein Meßgetriebe mit definierter Null-Position mit einer automatischen Entriegelung einer Welle hervor.

Die DE-A-40 37 493 offenbart des weiteren einen Wegaufnehmer, bei dem zur selbsttätigen Justierung der relativen Lage am Träger für eine Widerstandsschicht sowie am Schlitten für einen Abgriff Mitnahmeanschläge vorgesehen sind, durch die der nach Überwindung einer Arretierkraft in Richtung des Schlittens verschiebbare Träger im Bereich einer Endposition des Schlittens bei falscher Lage von diesem mitgenommen wird. Eine Selbstjustierung wird durch diesen Wegaufnehmer nicht ermöglicht.

In der US-A-4 599 601 ist ein Enkoder beschrieben, der eine Einrichtung für das Setzen eines absoluten Referenzimpulses hat und ein Reduktionsgetriebe aufweist.

Von diesem bekannten Stand der Technik ausgehend liegt der Erfindung die Aufgabe zugrunde, einen selbstjustierenden Positionssensor, der spezielle Anwendung als Lenkwinkelsensor bei Kraftfahrzeugen findet, zu schaffen, der weder eine Transportsicherung noch sonstige Mittenzentriermittel benötigt und bei dem es auch nicht notwendig ist, während der Montage spezielle Bedingungen am Kraftfahrzeug einzuhalten, also etwa die Räder präzise auf Geradeausstellung in Verbindung mit einer entsprechenden Lenkradposition zu bringen.

### Vorteile der Erfindung

Die Erfindung löst diese Aufgabe mit den kennzeichnenden Merkmalen des Anspruchs 1 und hat den Vorteil, daß keine weiteren Hilfsmittel für Abgleich oder Justierung des erfindungsgemäß ausgebildeten Positionssensors erforderlich sind, wobei dieser darüber hinaus noch selbstabgleichend ist und in jeder beliebigen Position in das jeweilige durch Messung zu erfassende Teil, also beispielsweise Kraftfahrzeug, eingebaut werden kann.

Hierdurch erübrigen sich Einstell- und aufwendige sonstige Montagearbeiten; auch ist es nicht erforderlich, auf eine spezielle Transportsicherung zu achten, diese also vorzusehen und dafür zu sorgen, daß die Transportsicherung dann spätestens nach dem Einbau auch wieder entfernt wird.

Ein weiterer ganz wesentlicher Vorteil bei vorliegender Erfindung besteht darin, daß die Selbstzentrierung selbstverständlich zu jeder Zeit wiederholbar ist, da alle für die Selbstzentrierung erforderlichen Elemente und Komponenten beim eingebauten Positionssensor verbleiben.

So bereitet es beispielsweise keinerlei Probleme, etwa bei einem späteren Austausch des Lenkrades bei einem Kraftfahrzeug oder Arbeiten an der Lenkgeometrie den Lenkwinkelsensor wieder zu zentrieren, also so abzugleichen, daß er ein einwandfreies Signal über den Lenkeinschlag der Vorderräder liefert. Es ist nämlich nur erforderlich, daß man nach den vorgenommenen Arbeiten beliebiger Art die Lenksäule einfach in mindestens einer Drehrichtung bis zum Anschlag durchdreht - ein Vorgang, der bei einer Lenksäule ohnehin ständig geschieht, und die Selbstjustierung des Positionssensors hat stattgefunden. Üblicherweise wird dieser Vorgang in beiden Drehrichtungen durchgeführt, so daß eine einwandfreie Mittenjustage des Positionssensors hierdurch sichergestellt ist.

Dabei ist bei dem erfindungsgemäßen selbstjustierenden Positionssensor der einfache Aufbau und die kompakte Form von Vorteil, wobei sich über den gesamten Drehbereich der Lenksäule eine hohe Genauigkeit ergibt.

Durch die in den abhängigen Ansprüchen aufgeführten Maßnahmen sind vorteilhafte Weiterbildungen des im Anspruch 1 angegebenen Positionssensors möglich.

### Zeichnung

Ausführungsbeispiele der Erfindung sind in der Zeichnung dargestellt und werden in der nachfolgenden Beschreibung näher erläutert. Es zeigen:
- Fig. 1: eine seitliche Schnittdarstellung eines Positionssensors mit zwischengeschaltetem Getriebe;
- Fig. 2: den Positionssensor der Fig. 1 als bevorzugte Ausführungsform in Draufsicht;
- Fig. 3: eine bevorzugte Ausführungsform einer Widerstandsbahn (durchdrehbar) und
- Fig. 4: den elektrischen Meßspannungsverlauf über den Drehwinkel bei der Widerstandsbahn der Fig.3, von welcher bei dem dargestellten Ausführungsbeispiel die Hälfte für die Erfassung der sensorfunktion eingesetzt wird.

### Beschreibung der Ausführungsbeispiele

Der Grundgedanke vorliegender Erfindung besteht darin, einen Positionssensor, speziell einen Drehwinkelsensor für beliebige Anwendungsfälle, selbstjustierend auszubilden, wobei im Übertragungsbereich des Getriebes, welches durchaus als formschlüssiges Übertragungsgetriebe ausgebildet ist, um Verstellungen im Betrieb durch Veränderung von Relativpositionen zu vermeiden, Mittel zur gewollten Relativverdrehung von Getriebeteilen so vorgesehen sind, daß jeweils vorgegebene Endpositionen im Bereich des Positionssensors einerseits sowie des diesen antreibenden Maschinenelements andererseits in Übereinstimmung gebracht werden können. Bevor auf die sehr vereinfachte und schematische Darstellung in der Zeichnung genauer eingegangen wird, wird nochmals hervorgehoben, daß die Anwendung der Erfindung als Grobsensor bei einem Tandempotentiometer für die Lenkwinkelbestimmung lediglich ein bevorzugtes Anwendungsgebiet ist und sich die Erfindung bei allen Maschinenteilen mit Vorteil anwenden läßt, bei denen auch mehrere Umdrehungen oder auch lineare Wegstrecken zurückzulegen sind, welche über einen rotatorischen Sensor erfaßt werden (z.B. in Verlängerung einer Antriebsspindel), um ohne jede Vorjustierung eine hochgenaue Endlageübereinstimmung und damit Mittenjustage des Meßsystems zum antreibenden System zu erreichen.

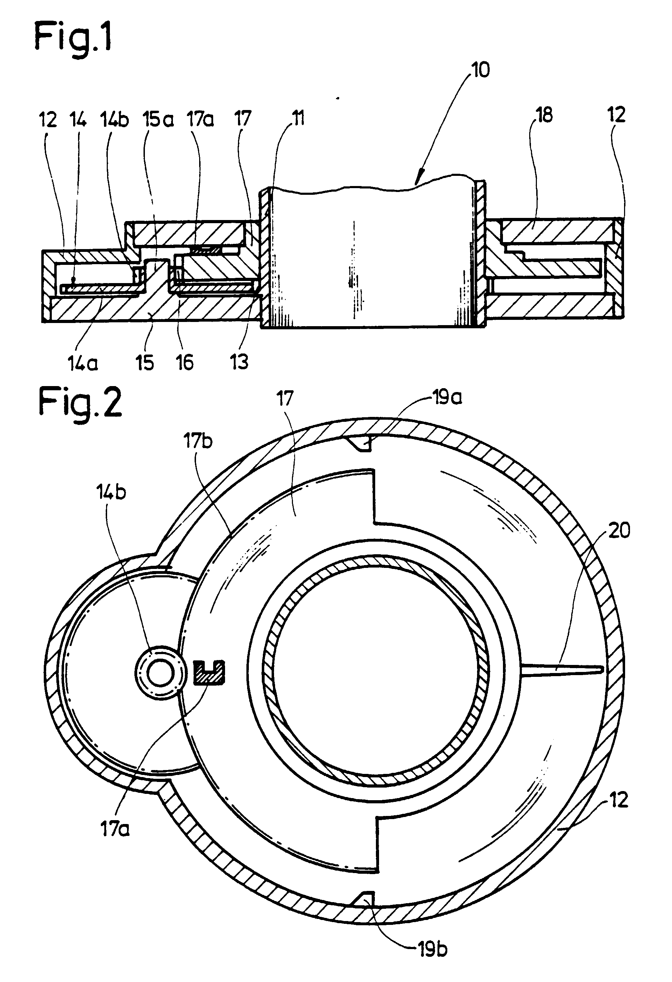

Bei dem in Fig. 1 dargestellten Ausführungsbeispiel ist der selbstjustierende Positionssensor mit 10 bezeichnet; in bevorzugter Ausgestaltung kann für zielle Anwendungszwecke (Lenkwinkelsensor) der Positionssensor 10 durch einen Feinsensor ergänzt werden, der dann zweckmäßigerweise direkt oberhalb und zum Teil unter Verwendung gleicher Bauteile wie der Positionssensor aufgebaut wird. Hierauf wird weiter unten noch genauer eingegangen. Im Falle einer Feinsensorzuordnung wird der Positionssensor 10 zu einem Grobsensor. Ein äußeres Antriebselement oder Getriebeelement ist mit 11 bezeichnet; bei einem Lenkwinkelsensor kann sich durch diese hohle äußere Antriebswelle die Lenksäule erstrecken, die dann mit dem äußeren Antriebselement 11 verbunden ist. Die einzelnen Komponenten sind in einem Gehäuse 12 gelagert bzw. von diesem aufgenommen, wobei das äußere Antriebselement 11 über eine Verzahnung 13 mit einem Zwischenzahnrad 14 kämmt, welches von einem Achsstummel 15a einer stationären Lagerscheibe 15 drehbar gelagert ist. Das Zwischenzahnrad 14 ist als Doppelzahnrad ausgebildet und umfaßt ein unteres Teilzahnrad 14a, welches mit dem äußeren Antriebselement 11 kämmt und ein oberes, mit dem unteren Zahnrad 14a drehfestes und vorzugsweise einstückiges Ritzel 14b, welches seinerseits über eine weitere Zwischenverzahnung 16 ein drehbares Teil des Positionssensors 10, und zwar bevorzugt einen Schleiferträger 17 antreibt. Der Schleifer 17 selbst ist bei 17a angedeutet.

Der Schleifer 17a des angetriebenen Schleiferträgers 17 gleitet auf einer in der Darstellung der Fig. 1 nicht erkennbaren Widerstandsbahn, die von einer Trägerplatte 18 gelagert ist und in der Zeichenebene der Fig. 1 nach unten blickt.

Die Grundfunktion eines bisher insoweit konventionellen Positionssensors ist dann so, daß bei Verdrehung des äußeren Antriebselements 11 über das Zwischengetriebe 14 der Schleifer längs der Widerstandsbahn verstellt wird, so daß sich jeweils unterschiedliche Meßsignale ergeben.

Betrachtet man die Darstellung der Fig. 2 genauer, dann erkennt man in der Draufsicht bei weggenommener Widerstandsbahn-Trägerscheibe 18 die Mittel zur automatischen Selbstjustierung oder Mittenjustage, die mindestens einen gehäusefesten Anschlag 19a, 19b umfassen sowie eine Art Anschlagzunge 20 am sich drehenden Hauptteil des Positionssensors 10, also am Schleiferträger 17 befestigt.

Aus der Darstellung der Fig. 2 erkennt man, daß sich bei dem dargestellten Ausführungsbeispiel der Schleiferträger 17 lediglich angenähert um einen Halbkreis dreht; dies ist, um hierauf sofort hinzuweisen, lediglich eine Vereinbarung, die sich aus den sonstigen Gegebenheiten und aus der Verwendung gleicher Materialien für Fein- und Grobsensor ergibt und keine Einschränkung für die grundsätzliche Konzeption des Positionssensors 10 bildet - Verdrehungen bis nahezu 360° sind durchaus möglich.

Eine erste Variante eines selbstjustierenden Positionssensors ist so ausgebildet, daß die Anschlagzunge 20 federnd nachgiebig ausgebildet ist und am Gehäuse beidseitig und sich in etwa diametral gegenüberliegend zwei Anschläge 19a, 19b vorgesehen sind, die in den jeweiligen Endpositionen mit der federnden Anschlagzunge 20 in Wirkverbindung geraten.

Ferner ist bei dieser Ausführungsvariante noch wesentlich, daß dann, wenn in den jeweiligen Endlagen die federnde Anschlagzunge 20 zur Anlage an die Anschläge 19a bzw. 19b gelangt, in der Verzahnung zwischen dem Ritzel 14b und dem halbkreisförmigen Stirnzahnradverlauf 17b des Schleiferträgers 17 lediglich nur noch ein oder bei sehr feiner Verzahnung einige wenige Zähne im Eingriff sind, so daß sich dann folgende Funktion ergibt, die hier wieder in Verbindung mit einem Lenkwinkelsensor erläutert wird. Grundsätzlich können Lenksäule und Positionssensor 10 als Grobsensor in beliebiger Relativposition zueinander eingebaut werden; zur Justage beider Komponenten auf Mittelstellung wird die Lenksäule auf einen ihrer Endanschläge gedreht, wobei zunächst zum besseren Verständnis davon ausgegangen wird, daß, bevor noch das äußere Antriebselement 11, welches zum vereinfachten Verständnis durchaus als Lenksäule oder Lenksäulenteil angesehen werden kann, selbst an seinen Anschlag in der Endlage gelangt, die federnde Zunge 20 beispielsweise schon am Anschlag 19b anliegt. In diesem Fall wird aufgrund der Geometrie im Positionssensoraufbau das Ritzel 14b sich (zunächst) weiterdrehen und auch den Schleiferträger 17 weiter antreiben, wobei die federnde Anschlagzunge 20 sich etwas durchbiegt, bis das Ritzel 14b des Zwischenrades 14 den Eingriff mit dem teilverzahnten Rad des Schleiferträgers 17 verliert. Ab diesem Moment kann sich die Lenksäule beliebig lange weiterdrehen, bis sie selbst an ihren äußeren mechanischen Anschlag gelangt, was im Bereich des Positionssensors lediglich zur Folge hat, daß das Ritzel 14b sich mit seiner Verzahnung klackend aufgrund der Federwirkung der Zunge 20 unter ratschender Geräuschentwicklung vorbeidreht, bis auch die Lenksäule ihren Endanschlag erreicht hat. Wird die Lenksäule von diesem Moment an auch nur um einen geringen Winkel wieder zurückgedreht, verursacht die federnde Zunge 20 den sofortigen Wiedereingriff zwischen den beiden Verzahnungen von Ritzel 14b und Schleiferträger 17, so daß nunmehr der Schleiferträger, wie erkennbar, auf auf die eine Endlage der Lenkwinkelposition eingestellt ist.

Lediglich für den Fall, daß Positionssensor und Lenksäule so relativ verdreht zueinander eingebaut worden sind, daß in der einen Lenkwinkelanschlagsposition der geschilderte Mechanismus gar nicht auftritt, weil der Eingriff zwischen dem Ritzel 14b und dem Schleiferträger 17 nicht bis zur Durchratschposition im gungsgetriebe erfolgt ist, muß dieser Vorgang auch in der anderen Drehrichtung durchgeführt werden, in welcher dann, wie es sich versteht, die freie Durchdrehbarkeit zwischen den beiden Getriebeteilen um so früher auftritt und dann eben die Justierung von der anderen Seite her erfolgt. Die federnde Anschlagzunge 20 sichert auf jeden Fall durch ihren ständig auf den Schleiferträger 17 ausgeübten Druck dann, wenn die Getriebezähne in der äußeren Anschlagsposition aneinander vorbeigleiten, in der in anderer Richtung erfolgenden Drehung den sofortigen Wiedereingriff.

Diese Grundkonzeption ermöglicht eine Vielzahl von Varianten, zunächst unter Beibehaltung einer federnden Anschlagzunge 20, wobei die stationären Anschläge 19a, 19b beliebig verstellt werden können, bis sie beispielsweise zu einem Anschlag zusammenfallen, der dann von der federnden Zunge auf seinen beiden Seiten kontaktiert wird, was bedeutet, daß für den Positionssensor bis maximal nahezu eine vollständige Umdrehung für die Signalgabe im Potentiometerbereich realisiert werden kann.

Eine weitere Ausführungsvariante besteht darin, daß man, unter Beibehaltung jeweiliger Anschläge 20 am sich drehenden Hauptteil des Positionssensors und des mindestens einen ortsfesten Anschlags 19a, 19b die federnde Zunge starr ausbildet und im Bereich des Zwischengetriebes eine Rutschkupplung anordnet, die aber nur mit einiger Kraftanstrengung gelöst werden kann und vorzugsweise eine gegenseitige, durch Federvorspannung wirksame Kerbverzahnung enthält, so daß definierte Positionen eingenommen und auch beibehalten Werden. Existiert beispielsweise eine solche Rutschkopplung zwischen dem Ritzel 14b und dem Hauptrad 14a des Zwischenrades 14, etwa in Form einer in der Ebene der Räder liegenden, aufeinander zu gerichteten und unter Federvorspannung liegenden Kerbverzahnung, dann wird sich auch hier, sobald der Schleiferträger 17 einen seiner festen Anschläge aufgrund der arretierenden Zunge 20 erreicht hat, ein Durchdrehen zwischen dem Ritzel 14b und dem Hauptrad 14a ergeben, mit sofortigem Eingriff und Mitnahme des Schleiferträgers 17 dann, wenn nach Erreichen der Endlage des äußeren Antriebselementes die Drehrichtung umgekehrt wird. Auch hierdurch ergibt sich eine hochgenaue Mittenjustage bzw. Endlagenjustierung.

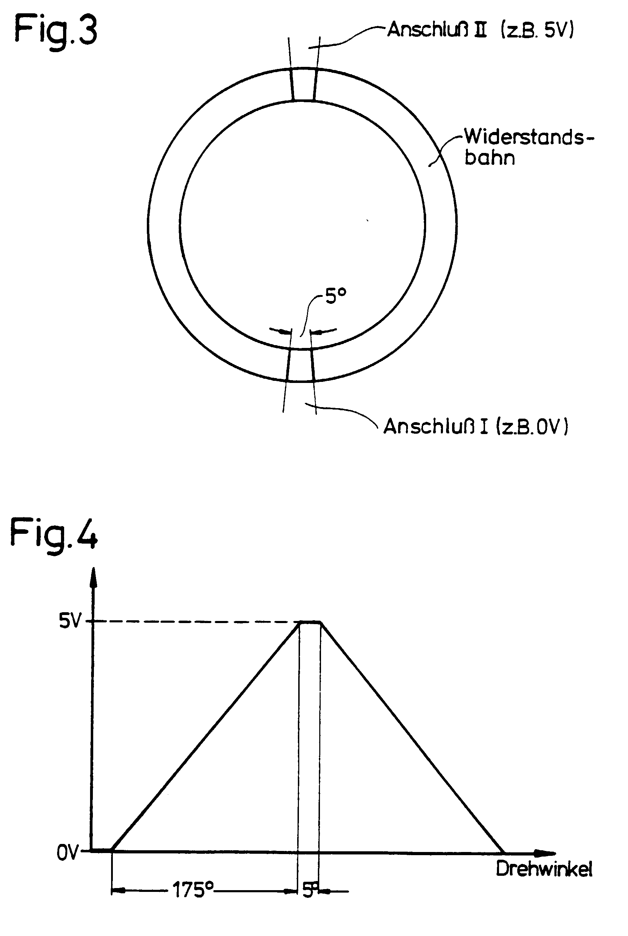

In der bevorzugten Ausführungsform eines Lenkwinkelsensors sind noch einige Vereinfachungen von Vorteil, die darin bestehen, daß beispielsweise unmittelbar oberhalb des Widerstandsbahnträgers 18 der Feinsensor angeordnet wird, wobei dessen Widerstandsbahn entweder auf der nach oben freiliegenden Seite der Trägerscheibe 18 oder auf einer eigenen Trägerscheibe angeordnet wird. Bevorzugt werden aber für die Widerstandsbahnen von Grobsensor und Feinsensor (nicht dargestellt) gleiche Widerstandsbahnverläufe verwendet, so daß sich durch diese Vereinfachungen auch Kostenreduzierungen ergeben. Eine bevorzugte Ausführungsform ist in Fig. 3 beispielsweise dargestellt und zeigt eine über 360° durchdrehbare Widerstandsbahn, die diametral gegenüberliegend einen ersten Anschluß I und einen zweiten Anschluß II aufweist, die sich beispielsweise über jeweils 5 Winkelgrade erstrecken können und wobei am Anschluß II eine Speisespannung von beispielsweise 5 Volt zugeführt werden kann bei Verbindung des Anschlusses I mit Masse. Eine solche Widerstandsbahn liefert erkennbar die zunächst linear ansteigende und anschließend nach Überwindung des 5° Anschlußwinkels wieder abfallende Spannung über dem Drehwinkel, wobei dann für die Realisierung des Grobsensors mit Vorteil lediglich die Hälfte eines solchen Widerstandsbahnverlaufs verwendet zu werden braucht.

Daher ergibt sich bei dem in Fig. 2 dargestellten Positionssensor dann, wenn er als Grobsensor eingesetzt wird, für einen Lenkwinkelsensor bevorzugt eine Signalgabe lediglich über einen Halbkreis, also eine von 0 bis auf 5 Volt ansteigende Spannung über einen Drehwinkel von in diesem Fall 175°, während der zugeordnete Feinsensor, dessen Schleifer dann von dem äußeren Antriebselement 11 unmittelbar angetrieben werden kann, um mehrere 360° durchdrehbar gestaltet sein kann. Man erkennt im übrigen, daß bei einem solchen Positionssensor zur automatischen Selbstjustierung einerseits die Beibehaltung der festen, am besten durch formschlüssigen Eingriff von Getriebeteilen gesicherten Relativposition der beteiligten Komponenten angestrebt ist und andererseits die Getriebeelemente durchdrehbar gestaltet sind, um die Endlagenübereinstimmung zu erzielen des äußeren Antriebselements oder der Lenksäule mit dem durch den Anschlag im Positionssensor vorgegebenen Beginn der Signalstrecke am Potentiometer, wodurch dann auch die Mittenjustage gesichert ist. Lediglich für den Fall, daß die Lenkwinkeleinstellung nicht ganz symmetrisch ist, beispielsweise also bei einem Kraftfahrzeug nach der einen Richtung ein größerer Lenkwinkel als nach der anderen besteht, sind entsprechende Vorkehrungen auch im Potentiometerbereich zu treffen, was problemlos möglich ist, da die Lenkwinkelgeometrie des zugeordneten Kraftfahrzeugs natürlich bekannt ist. In diesem Falle braucht man dann lediglich für den Grobsensorbereich die Anschläge anders zu legen bzw. den relativen Zahneingriff, also die Verzahnung am Schleiferträger 17 in der einen Richtung etwas weiterzuführen entsprechend der erreichbaren Lenkwinkelendlage in der einen oder anderen Drehrichtung.

## Patentansprüche

1. Positionssensor für Bewegungsabläufe, wobei zwischen dem Drehteil des Positionssensors und einem äußeren Antriebselement (11) ein Untersetzungsgetriebe (14; 14a, 14b) geschaltet ist, dadurch gekennzeichnet, daß zur automatischen Selbstjustierung das Untersetzungsgetriebe (14; 14a, 14b) in mindestens einer durch einen Anschlag (19a, 19b) bestimmten Endstellung des Sensordrehteils durchdrehbar ausgebildet ist, bis das äußere Antriebselement (11) ebenfalls eine vorgegebene Endlage erreicht, und daß anschließend bei Rückdrehen des äußeren Antriebselements (11) das Untersetzungsgetriebe den Sensordrehteil unmittelbar mitnimmt.

2. Positionssensor nach Anspruch 1, dadurch gekennzeichnet, daß das Sensordrehteil ein Schleiferträger (17) ist, an dem ein erstes anschlagbildendes Element in Form einer federnden Anschlagzunge (20) angeordnet ist, welches mit mindestens einem weiteren gehäusefesten Anschlag (19a, 19b) in Wirkverbindung gelangt.

3. Positionssensor nach Anspruch 2, dadurch gekennzeichnet, daß die Eingriffsgeometrie zwischen dem vom Untersetzungsgetriebe (14; 14a, 14b) angetriebenen Schleiferträger (17) und dem Untersetzungsgetriebe (14; 14a, 14b) so ausgebildet ist, daß die Verzahnung zwischen beiden in der jeweiligen Anschlagendlage bei federndem Durchbiegen der Anschlagzunge (20) freikommt und ein weiteres beliebiges Durchdrehen des äußeren Antriebselements ermöglicht, bei ständiger Einwirkung des von der federnden Anschlagzunge (20) hervorgerufenen Eingriffsrückdrucks.

4. Positionssensor nach Anspruch 1, dadurch gekennzeichnet, daß ein starrer, am Schleiferträger 17 angeordneter Anschlag (25) mit mindestens einem gehäusefesten und an beliebiger Winkelstellung angeordneten Anschlag (19a, 19b) zur unmittelbaren Arretierung des Schleiferträgers (17) in Wirkverbindung tritt, wobei gleichzeitig eine Rutschkupplung im Untersetzungsgetriebe das weitere freie Durchdrehen des äußeren Antriebselements (11) bis zum Erreichen von dessen Endlage ermöglicht.

5. Positionssensor nach irgend einem der Ansprüche 1-4, dadurch gekennzeichnet, daß in einem äußeren Gehäuse (12) und von diesem drehbar gelagert der Schleiferträger (17) angeordnet ist, der von einem Ritzel (14b) eines Zwischengetrieberads (14) angetrieben ist, welches mit einem mit dem Ritzel (14b) einstückig verbundenen Hauptrad (14a) mit dem äußeren Antriebselement (11) kämmt, wobei das so gebildete Zwischengetriebe seitlich zur Drehhohlwelle des äußeren Antriebselements (11) gelagert ist.

6. Positionssensor nach irgend einem der Ansprüche 1-5, dadurch gekennzeichnet, daß bei Einsatz als Grobsensor für einen Lenkwinkelsensor oberhalb der Trägerscheibe (18) für die Widerstandsbahn konzentrisch zu dieser die mit der Widerstandsbahn des Positionssensors identische Widerstandsbahn des Feinsensors angeordnet ist, die von einem unmittelbar am äußeren Antriebselement (11) befestigten Schleifer unter Umgehung des Untersetzungsgetriebes (14; 14a, 14b) beaufschlagt wird.

## Claims

1. A position sensor for motion sequences, there being connected between the rotary part of the position sensor and an external drive element (11) a step-down gear (14; 14a, 14b), characterized in that, for the purpose of automatic self-adjustment, the step-down gear (14; 14a, 14b) is constructed such that it may be turned to at least one limit position, determined by a stop (19a, 19b), of the sensor rotary part until the external drive element (11) also reaches a predetermined limit situation, and in that subsequently, as the external drive element (11) turns back, the step-down gear carries the sensor rotary part along directly.

2. A position sensor according to Claim 1, characterized in that the sensor rotary part is a wiper support (17) on which there is arranged a first element, forming a stop, in the form of a resilient stop tab (20), which comes into operative connection with at least one further stop (19a, 19b) fixed to the housing.

3. A position sensor according to Claim 2, characterized in that the geometry of engagement between the wiper support (17) driven by the step-down gear (14; 14a, 14b) and the step-down gear (14; 14a, 14b) is arranged such that the toothing between the two is disengaged in the respective stop limit situation as the stop tab (20) flexes resiliently, and makes possible any further turning of the external drive element, with a continuous action of the return pressure of engagement produced by the resilient stop tab (20).

4. A position sensor according to Claim 1, characterized in that a rigid stop (25) arranged on the wiper support (17) comes into operative connection with at least one stop (19a, 19b) which is fixed to the housing and arranged at any angular position, to directly block the wiper support (17), at the same time a slip clutch in the step-down gear enabling further free turning of the external drive element (11) until it reaches its limit situation.

5. A position sensor according to any one of Claims 1 - 4, characterized in that the wiper support (17) is arranged in an external housing (12) and mounted such that it may be rotated thereby, and is driven by a pinion (14b) of an intermediate gear wheel (14) which meshes by means of a principal wheel (14a), connected in one piece to the pinion (14b), with the external drive element (11), the intermediate gear formed in this way being mounted laterally with respect to the hollow shaft of rotation of the external drive element (11).

6. A position sensor according to any one of Claims 1 - 5, characterized in that, when used as a coarse sensor for a steer angle sensor, above the support disc (18) for the path of resistance, and concentric thereto, there is arranged the path of resistance of the fine sensor, which is identical to the path of resistance of the position sensor and is acted upon by a wiper secured directly to the external drive element (11), bypassing the step-down gear (14; 14a, 14b).

## Revendications

1. Capteur de position pour évolution de déplacement, dans lequel un engrenage démultiplicateur (14, 14a, 14b) est intercalé entre la partie tournante du capteur de position et un élément externe d'entraînement (11),
caractérisé en ce que
pour assurer un ajustage automatique l'engrenage démultiplicateur (14, 14a, 14b) est conçu de manière à patiner lorsque la partie tournante du capteur occupe au moins une position extrême définie par une butée (19a, 19b), jusqu'à ce que l'élément d'entraînement externe (11) ait atteint lui aussi une position extrême, à la suite de quoi, lors d'une rotation en sens inverse de l'élément d'entraînement (11), l'engrenage démultiplicateur (11) entraîne directement la partie tournante du capteur.

2. Capteur selon la revendication 1,
caractérisé en ce que
la partie tournante du capteur est un support frotteur (17) sur lequel est monté un premier élément constituant une butée sous la forme d'une languette élastique de butée (20) qui vient interagir avec au moins une autre butée (19a, 19b) fixée au boîtier.

3. Capteur selon la revendication 2,
caractérisé en ce que
la géométrie d'engrènement entre le support frotteur (17) entraîné par l'engrenage démultiplicateur (14, 14a, 14b) et cet engrenage est conçu de manière que la liaison par denture entre ces deux pièces occupant chacune leur position extrême de butée se trouve libérée par flexion élastique de la languette de butée (20) et permet à l'élément d'entraînement extrême d'effectuer une autre rotation quelconque, avec action continue de la pression de retour en prise exercée par la languette élastique de butée (20).

4. Capteur selon la revendication 1,
caractérisé en ce qu'
une butée rigide (25) montée sur le support frotteur (17) s'approche avec au moins une butée fixée au boîtier dans une position angulaire (19a, 19b) quelconque, pour arrêter directement le support frotteur (17) tandis qu'en même temps un accouplement à patinage situé dans l'engrenage démultiplicateur permet à l'élément d'entraînement (11) de tourner librement avec patinage jusqu'à ce qu'il atteigne sa position extrême.

5. Capteur selon une quelconque des revendications 1 à 4,
caractérisé en ce que
le support frotteur (17), est monté tournant dans un boîtier externe et est entraîné par un pignon (14b) monobloc avec une roue intermédiaire (14a) d'une roue principale (14a) engrenant avec l'élément entraîneur (11), de sorte que l'engrenage intermédiaire ainsi constitué se trouve disposé latéralement par rapport à l'élément d'entraînement externe (11).

6. Capteur selon une quelconque des revendications 1 à 5,
caractérisé en ce que
dans le cas où il est utilisé comme capteur grossier dans un capteur d'angle de braquage d'un véhicule, situé au dessus du disque (18) portant la piste résistante concentrique au disque, la piste résistante du capteur de position est la même que la piste de résistance du capteur de précision et est associé à un frotteur monté directement sur l'élément d'entraînement externe (11), sans passer par l'engrenage démultiplicateur (14, 14a, 14b).
